# EUROPEAN PATENT SPECIFICATION

(11) **EP 0 769 662 B1**
(45) Date of publication and mention of the grant of the patent: **11.07.2001**
(21) Application number: 96116580.0
(22) Date of filing: 16.10.1996
(51) Int. Cl.: F24F 6/02, G05D 9/12

(54) **Method for controlling the water level and the presence of foam in immersed-electrode humidifiers**
Verfahren zur Regelung des Wasserstandes und des Schaums in Luftbefeuchtern mit eingetauchten Elektroden
Méthode de contrôle du niveau de l'eau et de la présence de mousse dans des humidificateurs à électrodes immergées

(30) Priority: 17.10.1995 IT PD950193
(43) Date of publication of application: 23.04.1997
(73) Proprietor: Carel S.r.l., 35020 Brugine (Padova) (IT)
(72) Inventor: Rossi, Luigi, 35021 Piove di Sacco (Padova) (IT)
(74) Representative: Modiano, Guido, Dr.-Ing.

(56) References cited:
- BE-A- 809 614
- DE-A- 2 228 901
- DE-A- 3 405 212
- US-A- 4 705 936

## Description

The present invention relates to a method for controlling the water level and the presence of foam, particularly in immersed-electrode humidifiers.

Conventional immersed-electrode humidifiers, substantially constituted by a plastic container that contains water, in which two or more electrodes are immersed, have been in use for some time.

Conventional immersed-electrode humidifiers usually also include a water level sensor to indicate when the container is full, a device for measuring the absorbed electric current, switch or regulator means for supplying the electric power applied to the electrodes, a water filling valve, a discharge valve or pump, and a control system for managing the production of steam by means of the above-listed devices.

Immersed-electrode humidifiers utilize the conductivity of water produced by the presence of dissolved salts to allow the flow of a current, which produces heat and generates water vapor.

In immersed-electrode humidifiers there are substantially three main parameters that are linked to each other: the production of steam is closely linked to the absorbed current, to the conductivity of the water, and to the level of the water that is present in the container.

Evaporation continuously lowers the water level, which must be restored with successive refilling operations.

On the other hand, any excess water is eliminated.

In steady-state conditions, the current is kept within a range which is centered on a nominal value determined by the geometric and constructive characteristics of the humidifier and by the chemical and physical characteristics of the water.

The evaporating water carries away only a small part of the mineral salts; therefore, if successive filling operations are performed without ever discharging, the concentration of salts inside the humidifier increases, thus causing an increase in electrical conductivity, and this can also lead to regulation problems, with possible damage to the humidifier.

The conductivity is directly linked to the rate at which the absorbed current varies.

Frequent and excessive water discharges cause equally frequent water filling operations to top up the current, and this entails introducing scale in the container; said scale, by precipitating because of the temperature, quickly saturates the evaporator.

In practice, except for accidental damage or damage caused by poor process management, said scale is the main cause of the aging of the cylinder, since devices for eliminating said scale, although known, are too expensive to be applied in order to extend the life of the evaporator.

Moreover, the amount of water to be discharged in order to keep the internal concentration at a desired value can be determined from the behavior of the absorbed current intensity.

Control of the steam production process must normally be capable of handling three main stages of the life of an evaporator: the startup stage, the steady-state stage, and the saturation stage.

The startup stage relates to new or fully discharged evaporators, especially if the supplied water has low conductivity.

In this case, it is sometimes difficult to produce the required amount of steam even though the cylinder is filled completely.

If the possibility of discharges is eliminated, the concentration process is facilitated, allowing the internal conductivity to increase and thus simultaneously facilitating the production of steam.

Once the required production level has been reached, the cylinder starts to operate in the steady state.

During the steady-state stage, internal conductivity is controlled so as to stay at the optimum value adjusting the opening and closing of the filling and discharge valve, and the container gradually fills with scale.

During the saturation stage, the presence of the scale deposits compromises the conditions inside the cylinder, and even if the water level reaches the maximum allowed value, in order to maintain satisfactory steam production it is necessary to limit water discharges in order to increase internal conductivity if production is to be maintained.

When steam production is no longer controllable, the evaporator is replaced.

During all these three described stages, the humidifier must be managed in the presence of foam.

It has been observed that some kinds of supply water, especially if of the low-conductivity or softened type, tend to facilitate foaming.

The quantity and thickness of the foam can be such as to activate the filling sensor, which halts water filling.

In this case, the water level can be insufficient to produce the required steam.

In the presence of foam, the problem substantially resides in the fact that the sensor mistakes the foam for water, activating an automatic command or the request for a manual command and incorrectly detecting a situation that relates to the saturated-cylinder or startup stage as described in the previous cases.

In this situation, the discharge command is limited or blocked, since it is incorrectly thought that internal conductivity must be increased.

Substantially, this occurs in an uncontrolled manner, further facilitating foaming and reducing steam production.

In some cases, an attempt has been made to obviate this drawback by making the sensor insensitive to the presence of foam.

However, with forced water filling this entails the escape of the foam from the steam discharge port and the overspill of the water from an overflow discharge port.

It is also known from DE 34 05 212 a method for controlling the water level in a humidifier with flush/drain cycles for removal of mineral deposits in function of the intensity of current, that is when the intensity of current has decreased more than a certain amount for a given time.

A principal aim of the present invention is to provide a method that allows to correctly detect the water level and the presence of foam, helping to manage in an optimum manner every stage of the life of an immersed-electrode humidifier.

Accordingly, an object of the present invention is to provide a method that is adapted to automatically manage foam elimination.

Another object of the present invention is to provide a method that is adapted to distinguish between a humidifier in the startup stage and a humidifier in the steady-state stage.

A further object of the present invention is to provide a method that is adapted to restore as quickly as possible the optimum steady-state operating conditions of the humidifier.

This aim, these objects, and others that will become apparent hereinafter are achieved by a method for controlling the water level and the presence of foam in immersed-electrode humidifiers of the type comprising a container which is connected to water filling and discharge ducts controlled by valves and is also provided with an opening for the discharge of the produced steam; at least two electrodes; a sensor for detecting the presence of water at the maximum allowed level; a device for measuring the intensity of the absorbed current; power supply means; said method being a part of an algorithm for managing the operation of said humidifier, which consists in:
-- measuring, during water filling, the intensity of the current absorbed by the electrodes and comparing the measured value with a first reference value, deactivating the control for opening the discharge valve and switching to normal steady-state management if the measured value is higher than said reference value, or starting to control the water level inside the container if the measured value is lower than said first reference value;
-- loading water into said container until the first current reference value is reached, unless the water presence sensor detects that the maximum level has been reached;
-- measuring, after the intervention of said sensor, the intensity of the absorbed electric current, comparing it with a second reference value and switching to normal management of the startup or saturation stages if the intensity of the absorbed current is higher than said second reference value or starting to check for the presence of foam if the absorbed current intensity is lower than said second reference value;
-- disconnecting, or reducing, the supply of current if its intensity is lower than said second reference value, continuing to load additional water, for a preset time, so as to give any foam the time to settle due to the reduction of the current and of the temperature;
-- continuing to load water for a preset maximum time, and if the water presence sensor reports that the maximum level has been reached within this time, deducing that there is no foam and going back to the beginning of the procedure;
-- performing foam management in order to eliminate said foam by discharging water for a preset time, if at the end of the maximum preset water filling time the water presence sensor does not report that the maximum level has been reached;
-- returning to the beginning of the procedure described so far.

Further characteristics and advantages of the present invention will become apparent from the description of an embodiment thereof, illustrated only by way of non-limitative example in the accompanying drawings, wherein:
figures 1, 2, and 3 are schematic views of an immersed-electrode humidifier;
figure 4 is a block diagram of the method for controlling the water level and the presence of foam according to the invention;
figure 5 plots the behaviour of the absorbed current and the states of the power supply, of the filling, and of the discharge.

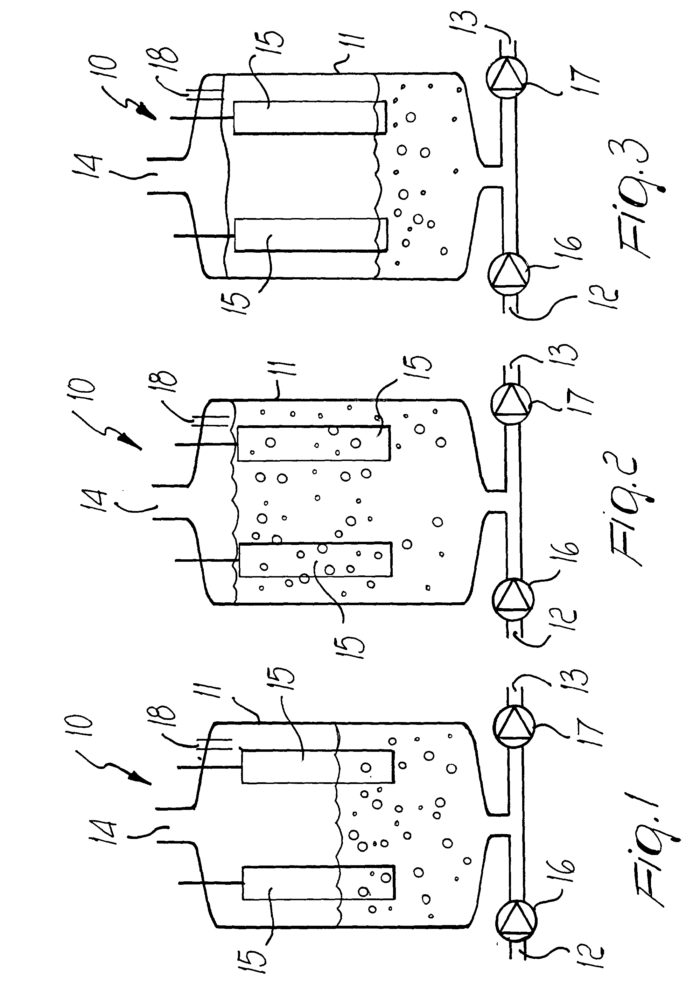

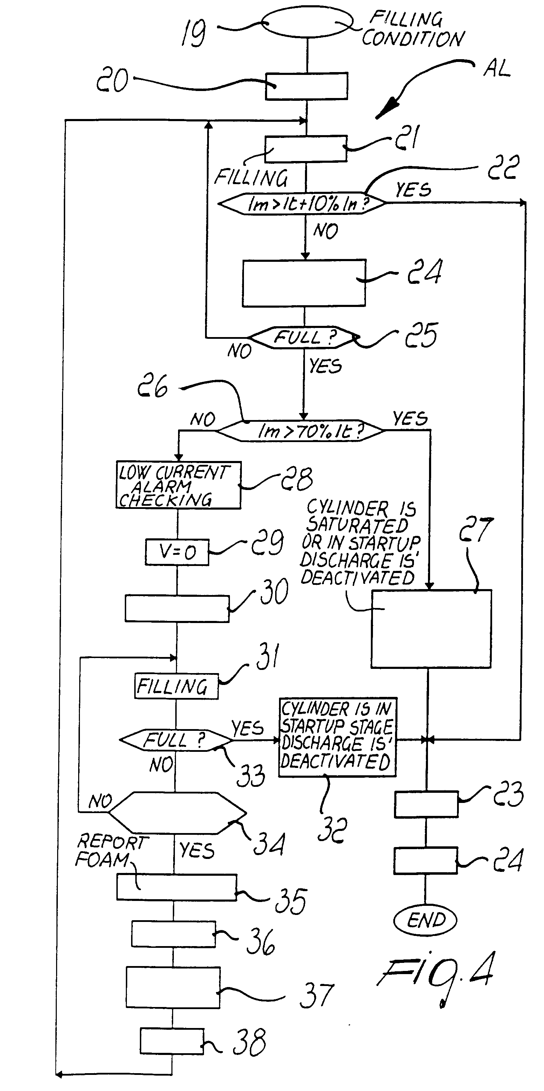

With particular reference to figures 1 to 3, an immersed-electrode humidifier is generally designated by the reference numeral 10.

The humidifier 10 comprises a container 11 that is supplied by a duct 12 and is provided with a discharge 13 and with an opening 14 that is located in its uppermost part for the discharge of the generated steam.

In this case, two electrically powered electrodes 15 are contained in the container 11 and there is provided a current measurement device, not shown.

The humidifier 10 comprises, in this case, a filling valve 16, a discharge valve 17, and a sensor 18 for detecting the presence of water at the maximum level allowed inside the container 11.

The humidifier 10 is managed by an algorithm for controlling the production of steam; its part related to water level control and to the detection and elimination of any foam that may have formed inside the container 11 is described hereinafter.

With reference to figure 4, a block diagram that schematically illustrates the water level control method according to the invention is generally designated by the reference sign AL.

The description of the water level control method starts in filling conditions (block 19) and therefore with the filling valve 16 initially open (block 20).

During filling (block 21), the intensity of the current absorbed by the electrodes 15 is measured (block 22) and the measured value is compared with a first reference value.

The first reference value relates to the control of production in steady-state operating conditions.

Merely by way of example, the first reference value can be the sum of the set point current, i.e., the current for correct operation, and of a percentage (on the order of approximately 10%) of the nominal current, which is between 30 and 100% of the set point value.

If the measured value is higher than the first reference value, the filling valve 16 is closed (block 23), leaving a counter, the function whereof will be specified hereinafter, set to zero (block 24) and performing normal steady-state management, substantially returning to the beginning of the procedure described so far.

In this condition, the humidifier 10 is in fact in normal operating conditions, in which the absorbed current is allowed to vary within a range that is centered on the nominal value.

It is optionally possible to provide for water conductivity checks which are not shown in the block diagram 19.

If instead the measured value is lower than the first reference value, the algorithm continues by starting to check the level of the water inside the humidifier 10.

A supply water lack check has also been included in this example.

Water continues to be loaded in order to reach the first current reference value, unless the water presence sensor reports that the maximum level has been reached. In this case, the current value is compared with a second reference value.

Merely by way of example, said second reference value can be estimated as 70% of the nominal current value.

The logic steps of reporting or not reporting that the container 11 is full and of checking and comparing the absorbed current are represented by the blocks 25 and 26 respectively.

If the measured absorbed current intensity value is higher than the second reference value, the algorithm shifts to normal management of the startup or saturation stages (block 27), deactivating the filling (block 23) and keeping the counter set to zero (block 24).

If the absorbed current value remains lower than the first reference value but higher than the second reference value although the container 11 has been filled, two possibilities are in fact considered.

A first possibility is that the humidifier 10 is in the startup stage and therefore requires a plurality of filling and evaporation cycles, which are obtained with a limited discharge command, in order to reach and exceed the first reference value, and the management of these cycles is assigned to the part of the algorithm that manages the startup stage.

A second possibility is that the humidifier 10 is in the saturation stage and therefore an absorbed current that is higher than the second reference value can be in itself acceptable.

Any replacement or adjustment of the humidifier 10 is in this case assigned to the part of the algorithm that is meant to manage the saturation stage.

If the measured electric current intensity value is instead lower than the second reference value, a check with no power supply is performed (block 28) in this example by way of illustration.

Power is disconnected (block 29) while additional water is loaded (block 31) for a preset time (block 30), so as to give any foam time to settle due to the reduction in current and temperature.

In this manner it is possible to check whether the full cylinder indication was incorrectly caused by the presence of foam, performing loading for a preset maximum time.

If the water presence sensor does not report that the maximum level has been reached when the preset maximum time expires, foam management is performed in order to eliminate it by performing discharges of water for preset time intervals.

If the sensor 18 reports that the maximum value has been reached within the expected filling time, this in fact means that the layer of foam was modest or nonexistent with respect to the water level.

If instead the sensor 18 does not report that the maximum level has been reached within the water loading time, it is possible to deduce that the water level is very low and that the foam layer is significant and must therefore be reduced.

From the logic point of view, if the sensor 18 reports that the maximum level has been reached within an expected water filling time, the cylinder is assumed to be in the startup stage, with consequent deactivation or limitation of the discharge command (block 32), keeping the counter 24 set to zero.

If instead the sensor 18 does not detect that the maximum water level has been reached within the intended water filling time, foam management is activated.

In the block diagram AL, these logic operations for checking whether the maximum water level has been reached and the water filling time are represented by the blocks 33 and 34 respectively and foam indication is represented by the block 35.

Once foam reporting has been activated, the counter is increased by one unit (block 36) while performing a first water discharge (block 37) for a preset discharge time.

Once water discharge has ended, the power supply is restored (block 38), returning to the condition of the block 21 by opening the filling valve 16.

It should be noted that the method according to the invention can work only if the sensor 18 continues to operate even if the supply of current to the electrodes 15 is interrupted.

Furthermore, the water level control method according to the invention ensures the best balance of the functional parameters, which do not necessarily imply complete elimination of the foam that is present.

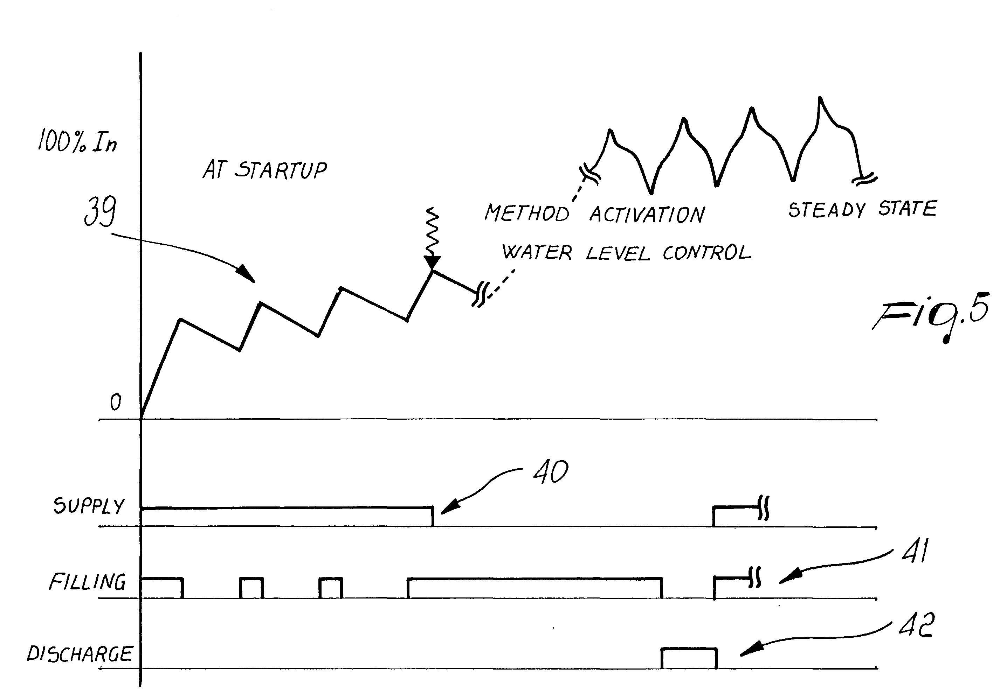

With particular reference to figure 5, it is possible to observe the plot of the current absorption (line 39), of the state of the power supply (line 40), of the state of the filling valve 16 (line 41), and of the state of the discharge valve 17 (line 42).

These lines are arranged so as to match one another on a common time axis, illustrating the behavior of the various conditions of the humidifier.

In particular, it should be noted that the water level control method according to the invention provides for automatic recognition of the condition in which the humidifier is in the startup/saturation stage or in the steady-state stage and furthermore also automatically recognizes the presence or lack of foam.

In this manner, the control method according to the invention ensures, in any condition, the optimum relation between the various functional parameters in order to ensure adequate steam production.

The present invention is susceptible of numerous modifications and variations, all of which are within the scope of the inventive concept; likewise, all the components may be any according to the available materials.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Method for controlling the water level and the presence of foam in immersed-electrode humidifiers of the type comprising a container (11) which is connected to water filling (12) and discharge (13) ducts controlled by valves (16, 17) and is also provided with an opening (14) for the discharge of the produced steam; at least two electrodes (15); a sensor (18) for detecting the presence of water at the maximum allowed level; a device for measuring the intensity of the absorbed current (22); power supply means; said method being a part of an algorithm for managing the operation of said humidifier, which consists in:
-- measuring (22), during water filling (19), the intensity of the current absorbed by the electrodes (15) and comparing (26) the measured value with a first reference value, deactivating (27) the control for opening the discharge valve (17) and switching to normal steady-state management if the measured value is higher than said reference value, or starting to control the water level inside the container (11) if the measured value is lower than said first reference value;
-- loading water into said container (11) until the first current reference value is reached, unless the water presence sensor (18) reports that the maximum level (25) has been reached;
-- measuring (22), after the intervention of said sensor (18), the intensity of the absorbed electric current, comparing (26) it with a second reference value and switching to normal management of the startup or saturation stages if the intensity of the absorbed current is higher than said second reference value or starting to check for the presence of foam if the absorbed current intensity is lower than said second reference value;
-- disconnecting (29), or reducing, the supply of current if its intensity is lower than said second reference value, continuing to load additional water (31), for a preset time (30), so as to give any foam the time to settle due to the reduction of the current and of the temperature;
-- continuing to load water for a preset maximum time (30), and if the water presence sensor (18) reports that the maximum level (33) has been reached within this time, deducing that there is no foam and going back to the beginning of the procedure;
-- performing foam management (35) in order to eliminate said foam by performing one or more discharges of water (37) for a preset time, if at the end of the maximum preset water filling time (34) the water presence sensor (18) does not report that the maximum level has been reached;
-- returning to the beginning of the procedure described so far.

2. Method according to claim 1, characterized in that said first reference value is provided by the sum of the set point current or correct operation current and of a percentage, preferably on the order of 10% of the nominal current, the value whereof is between 30 and 100% of the set point value.

3. Method according to claim 1, characterized in that said second reference value for the current is conveniently 70% of the nominal current value.

4. Method according to claim 1, characterized in that said water discharges (37) occur with a sequence that is determined by said counter (36), so that the duration of each discharge (37) is increased with respect to the duration of the preceding discharge until return to normal operating conditions occurs.

5. Method according to claim 1, characterized in that said water presence sensor (18) is supplied with power even when power is disconnected from the electrodes (15).

## Patentansprüche

1. Verfahren zur Regelung des Wasserstandes und des Schaums in Luftbefeuchtern mit eingetauchten Elektroden, der Bauart nach umfassend
einen Behälter (11), welcher mit durch Ventile (16, 17) gesteuerten Leitungen zum Wasserfüllen (12) und Entleeren (13) verbunden ist und wobei ferner eine Öffnung (14) für das Entweichen des erzeugten Dampfes vorgesehen ist;
mindestens zwei Elektroden (15);
einen Sensor (18) zur Feststellung des Vorhandenseins von Wasser bei dem maximal erlaubten Füllstand,
eine Vorrichtung zur Messung der Größe des aufgenommenen Stroms (22);
Stromversorgungsvorrichtungen;
wobei das Verfahren ein Teil eines Algorithmus zur Regelung des Betriebs des Luftbefeuchters ist, bestehend aus:
- Messung (22) der Größe des von den Elektroden (15) aufgenommen Stroms und Vergleichen (26) des Meßwerts mit einem ersten Referenzwert, Deaktivieren (27) der Steuerung zur Öffnung des Entleerungsventils (17) und Umschalten auf normale Stationärbetrieb-Regelung falls der Meßwert größer als der Referenzwert ist, oder Beginnen mit der Regelung des Wasserstands im Behälter (11) falls der Meßwert kleiner als der erste Referenzwert ist;
- Aufnahme von Wasser in den Behälter (11) bis der erste Referenzwert des Stroms erreicht ist, es sei denn, der Wasserstandsensor (18) zeigt an, daß der maximal erlaubte Stand (25) erreicht wurde;
- nach Eingreifen des Sensors (18) Messung (22) der Größe des aufgenommenen elektrischen Stroms, Vergleichen (26) der Größe mit einem zweiten Referenzwert und Umschalten auf normale Regelung der Anfangs- oder Sättigungsphasen falls die Größe des aufgenommenen Stroms größer als der zweite Referenzwert ist, oder Beginnen mit Prüfung auf das Vorhandensein von Schaum falls die Größe des aufgenommenen Stroms kleiner als der zweite Referenzwert ist;
- Abschalten (29) oder Verringern der Stromzuführung falls die Größe des Stroms kleiner als der zweite Referenzwert ist, Fortführen der Aufnahme von weiterem Wasser (31) für einen vorbestimmten Zeitraum (30), um somit durch die Verringerung von Strom und Temperatur einem Schaum die Zeit zum Setzen zu geben;
- Fortsetzen der Aufnahme von Wasser für eine vorbestimmte maximale Zeit (30) und Feststellen des Nichtvorhandenseins von Schaum sowie Zurückgehen zum Anfang des Ablaufs, falls der Wasserstandsensor (18) innerhalb dieser Zeit ein Erreichen des maximalen Wasserstands (33) anzeigt;
- Durchführung einer Schaumbehandlung (35) zur Beseitigung des Schaums durch eine oder mehrere Entleerungen von Wasser (37) für einen vorbestimmten Zeitraum (34), falls am Ende der vorbestimmten maximalen Wasser-Auffüllzeit (34) der Wasserstandssensor (18) nicht anzeigt, daß der maximale Wasserstand erreicht wurde;
- Zurückgehen zum Anfang des bisher beschriebenen Ablaufs.

2. Verfahren nach Anspruch 1, dadurch gekennzeichnet, daß der erste Referenzwert durch die Summe des Sollwertstroms oder korrekten Betriebsstroms und eines prozentualen Anteils, vorzugsweise in der Größenordnung von 10%, des nominalen Stroms, dessen Wert zwischen 30 und 100% des Sollwerts beträgt, gebildet ist.

3. Verfahren nach Anspruch 1, dadurch gekennzeichnet, daß der zweite Referenzwert für den Strom günstigerweise 70% des nominalen Stroms beträgt.

4. Verfahren nach Anspruch 1, dadurch gekennzeichnet, daß die Wasserentleerungen (37) in einer durch den Zähler (36) bestimmten Abfolge auftreten, wobei die Dauer einer jeweiligen Entleerung (37) bezogen auf die Dauer der vorhergehenden Entleerung erhöht ist, bis ein Zurückgehen zu normalen Betriebsbedingungen stattfindet.

5. Verfahren nach Anspruch 1, dadurch gekennzeichnet, daß der Wasserstandssensor (18) auch dann mit Strom versorgt wird, wenn die Elektroden (15) von einer Stromversorgung getrennt sind.

## Revendications

1. Procédé de commande du niveau d'eau et de la présence de mousse dans des humidificateurs à électrodes immergées du type comprenant un conteneur (11) qui est raccordé à des conduits de remplissage (12) et d'évacuation (13) d'eau commandés par des vannes (16, 17) et comportant également une ouverture (14) destinée à l'évacuation de la vapeur produite ; au moins deux électrodes (15) ; un capteur (18) destiné à détecter la présence d'eau au niveau maximal autorisé ; un dispositif destiné à mesurer l'intensité du courant absorbé (22) ; des moyens d'alimentation électrique ; le dit procédé faisant partie d'un algorithme destiné à gérer le fonctionnement du dit humidificateur, qui est constitué :
-- de la mesure (22), au cours du remplissage en eau (19), de l'intensité du courant absorbé par les électrodes (15) et de la comparaison (26) de la valeur mesurée et d'une première valeur de référence, de la désactivation (27) de la commande d'ouverture de la vanne d'évacuation (17) et du passage à une gestion normale en conditions permanentes lorsque la valeur mesurée est supérieure à la dite valeur de référence, ou de la mise en route de la commande du niveau d'eau à l'intérieur du conteneur (11) lorsque la valeur mesurée est inférieure à la dite première valeur de référence ;
-- du chargement d'eau dans le dit conteneur (11) jusqu'à ce que la première valeur de référence de courant, à moins que le capteur de présence d'eau (18) ne rapporte que le niveau maximal (25) a été atteint ;
-- de la mesure (22), après l'intervention du dit capteur (18), de l'intensité du courant électrique absorbé, de la comparaison (26) de celle-ci et d'une seconde valeur de référence et du passage à une gestion normale des phases de mise en route ou de saturation lorsque l'intensité du courant absorbé est supérieure à la dite seconde valeur de référence, ou de la mise en route en vue de contrôler la présence de mousse lorsque l'intensité du courant absorbé est inférieure à la dite seconde valeur de référence ;
-- de la déconnexion (29), ou de la diminution, de l'amenée de courant lorsque son intensité est inférieure à la dite seconde valeur de référence, de la poursuite du chargement d'eau additionnelle (31), pendant une durée prédéterminée (30), de manière à laisser le temps à la mousse de se déposer sous l'effet de la diminution du courant et de la température ;
-- de la poursuite du chargement d'eau pendant une durée maximale prédéterminée (30) et, lorsque le capteur de présence d'eau (18) rapporte que le niveau maximal (33) a été atteint au cours de cette durée, de la déduction qu'il n'y a pas de mousse et du retour au début de la procédure ;
-- de l'accomplissement de la gestion de la mousse (35) afin d'éliminer la dite mousse en accomplissant une ou plusieurs évacuations d'eau (37) pendant une durée prédéterminée lorsque, à la fin de la durée de remplissage en eau maximale prédéterminée (34), le capteur de présence d'eau (18) ne rapporte pas que le niveau maximal a été atteint ;
-- du retour au début de la procédure décrite jusqu'à présent.

2. Procédé selon la revendication 1, caractérisé en ce que la dite première valeur de référence est donnée par la somme de la valeur de consigne du courant ou du courant opératoire approprié et d'un pourcentage, de préférence de l'ordre de 10% du courant nominal, dont la valeur est comprise entre 30 et 100% de la valeur de consigne.

3. Procédé selon la revendication 1, caractérisé en ce que la dite seconde valeur de référence du courant est égale, de façon adéquate, à 70% de la valeur nominale du courant.

4. Procédé selon la revendication 1, caractérisé en ce que les dites évacuations d'eau (37) se produisent selon une séquence qui est déterminée par le dit compteur (36), de sorte que la durée de chaque évacuation (37) augmente par rapport à la durée de l'évacuation précédente, jusqu'à ce que les conditions normales de fonctionnement soient de retour.

5. Procédé selon la revendication 1, caractérisé en ce que le dit capteur de présence d'eau (18) est alimenté en énergie électrique, même lorsque l'alimentation électrique a été déconnectée à partir des électrodes (15).
